Europäisches Patentamt

European Patent Office

Office européen des brevets

(11) Veröffentlichungsnummer: **0 384 133**
**A1**

(12) **EUROPÄISCHE PATENTANMELDUNG**

(21) Anmeldenummer: 90101269.0

(51) Int. Cl.⁵: **A01G 5/04**

(22) Anmeldetag: 23.01.90

(30) Priorität: 23.02.89 DE 8902156 U

(43) Veröffentlichungstag der Anmeldung:
29.08.90 Patentblatt 90/35

(84) Benannte Vertragsstaaten:
AT BE CH DE DK FR GB IT LI LU NL SE

(71) Anmelder: Schwarzenberg, Hans Josef
Am Vorderflöss 40
D-4792 Bad Lippspringe(DE)

(72) Erfinder: Schwarzenberg, Hans Josef
Am Vorderflöss 40
D-4792 Bad Lippspringe(DE)

(74) Vertreter: Stracke, Alexander, Dipl.-Ing. et al
Jöllenbecker Strasse 164
D-4800 Bielefeld 1(DE)

(54) **Kernkörper für Pflanzen und Blumengebinde sowie Verfahren zu seiner Herstellung.**

(57) Gegenstand der vorliegenden Erfindung ist ein Kernkörper für Pflanzen und Blumengebinde. Dieser Kernkörper besteht erfindungsgemäß aus mindestens einem mit aushärtbaren Bindemitteln versetzten, gesteppten und formgepreßten Strohstreifen (11), d.h., aus biologisch abbaubarem Material.

Der Kernkörper läßt sich sehr preisgünstig herstellen, da als Ausgangsmaterial im wesentlichen Stroh benutzt wird.

Eine besonders zweckmäßige Verfahrensweise zur Herstellung eines derartigen Kernkörpers besteht darin, die Verpressung der mit aushärtbaren Bindemitteln versetzten Strohstreifen (11) in beheizbaren Formen in einem Temperaturbereich von etwa 150 bis 250 °C durchzuführen.

Fig. 3

## Kernkörper für Pflanzen und Blumengebinde sowie Verfahren zu seiner Herstellung

Die vorliegende Erfindung bezieht sich auf einen aus biologisch abbaubarem Material gefertigten Kernkörper für Pflanzen und Blumengebinde, insbesondere in Form eines Kranzkernes.

Die Erfindung bezieht sich weiterhin auf ein Verfahren zur Herstellung eines derartigen Kranzkernes.

Kernkörper der gattungsgemäßen Art sind in vielerlei Ausführungsformen bekannt.

Besonders beliebt sind Kernkörper aus Stroh, da diese einerseits aus einem natürlichen und somit biologisch abbaubarem Material bestehen und andererseits eine relativ hohe Festigkeit aufweisen und somit besonders gut geeignet sind zum Herstellen von Pflanzen und Blumengebinden.

Kernkörper, insbesondere in Form von Kranzkernen, werden bislang in Handarbeit gefertigt, wenn als Herstellungs material Stroh verwendet wird. Die Herstellung ist demzufolge recht aufwendig und vergleichsweise teuer.

Der vorliegenden Erfindung liegt die Aufgabe zugrunde, einen Kernkörper der gattungsgemäßen Art zu schaffen, der bei niedrigen Herstellkosten aus Stroh gefertigt werden kann.

Diese Aufgabe wird erfindungsgemäß dadurch gelöst, daß der Kernkörper aus mindestens einem mit aushärtbaren Bindemitteln versetzten, gesteppten und formgepreßten Strohstreifen besteht.

Gesteppte Strohstreifen werden für andere Verwendungszwecke bereits hergestellt und sind äußerst preiswert maschinell herzustellen. Derartige Strohstreifen werden nun mit aushärtbaren Bindemitteln versetzt, aus diesen mit Bindemitteln versetzten Strohstreifen wird dann ein Kernkörper geformt und letztendlich beliebig gepreßt. Durch das Aushärten des Bindemittels behält dann der derart hergestellte Kernkörper seine vorbestimmte Form.

Ein derartiger Kernkörper ist trotz der Verwendung von Stroh als wesentlichem Grundmaterial maschinell und somit äußerst preiswert und in hohen Stückzahlen herstellbar.

Eine weitere Aufgabe der Erfindung besteht darin, ein Verfahren zu besonders schnellen und wirtschaftlichen Herstellung eines derartigen Kernkörpers aufzuzeigen.

Diese Aufgabe wird erfindungsgemäß dadurch gelöst, daß die Verpressung der mit aushärtbaren Bindemitteln versetzten Strohstreifen in beheizbaren Formen in einem Temperaturbereich von etwa 150 bis 250 ° C erfolgt.

Durch diese Verfahrensweise wird die Aushärtung der Bindemittel erheblich beschleunigt, so daß die verpreßten Strohstreifen nach relativ kurzer Zeit entformt werden können. Außerdem wird durch die Verpressung der Strohstreifen in Temperaturbereichen von etwa 150 bis 250 ° C erreicht, daß die Oberfläche des Kernkörpers relativ "glat" wird, so daß ein nachfolgendes Umwickeln des Kernkörpers mit entsprechenden Bändern ohne die Gefahr der Beschädigung dieser Bänder auf Hochleistungs-Wickelmaschinen möglich ist.

Ausführungsbeispiele der Erfindung sind in der beigefügten Zeichnung dargestellt und werden im folgenden näher beschrieben. Es zeigen:

Fig. 1 eine perspektivische Darstellung eines teilweise fertiggestellten Kernkörpers mit durch strichpunktierte Linien angedeutetem, endgültigem Kernkörper-Querschnitt

Fig. 2 eine perspektivische Teildarstellung eines gesteppten Strohstreifens zur Herstellung eines Kernkörpers

Fig. 3 zwei zusammengefaßte, gesteppte Strohstreifen, aus denen ein Kernkörper in Form eines Kranzkernes herstellbar ist

Fig. 4 einen Strohstreifen mit rechteckigem Querschnitt, der durch Zusammenfalten auf größere Querschnittsbreite gebracht und zur Herstellung eines Kranzkernes verwendet wird.

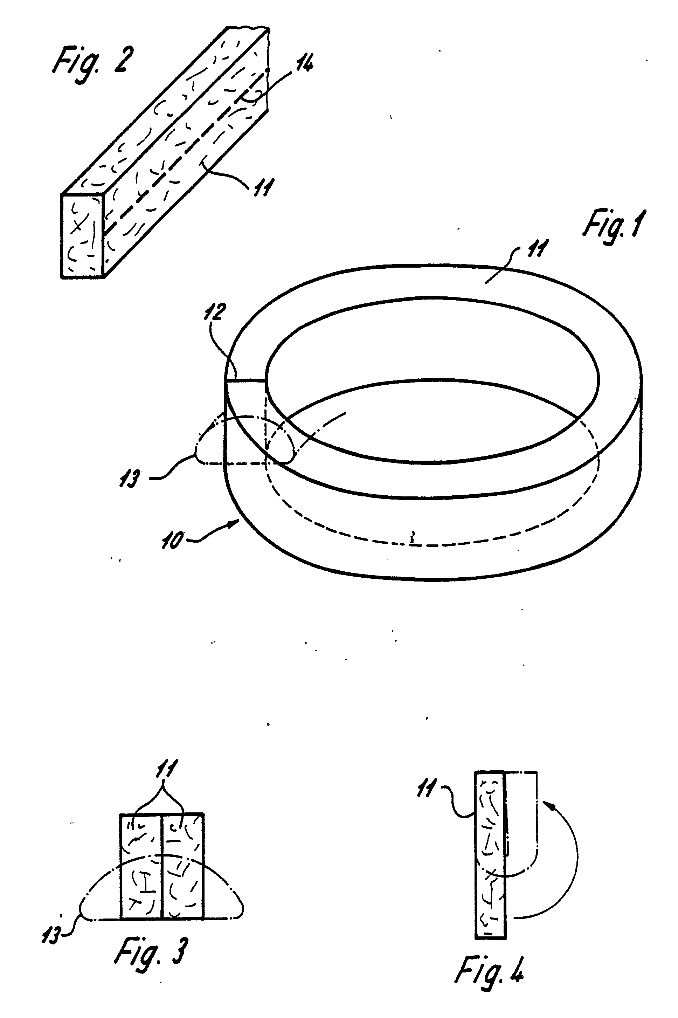

In Fig. 1 ist mit dem Bezugszeichen 10 insgesamt ein noch nicht vollständig fertiggestellter Kernkörper in Form eines Kranzkernes bezeichnet.

Dieser Kernkörper besteht im wesentlichen aus einem gesteppten Strohstreifen 11, der zu einem Kranz in Kreisform gebogen wird und dessen stirnseitige Enden 12 aneinanderliegen. Der gesteppte Strohstreifen 11 wird mit aushärtbaren Bindemitteln durchtränkt und dann in eine Querschnittsform gepreßt, die als halboval bezeichnet werden kann, wie dies durch die strichpunktierten Linien in Fig. 1 angedeutet ist. Nach dem Aushärten des Bindemittels verbleibt der Kernkörper 11 dann in der durch die strichpunktierten Linien angedeuteten Querschnittsform und kann dann als Kranzkern 13 bezeichnet werden.

Fig. 2 zeigt einen ansich bekannten, gesteppten Strohstreifen 11, der für die Fertigung des Kranzkernes 13 verwendet worden ist. Derartige, mit einer Steppnaht 14 versehene Strohstreifen 11 werden bereits zu anderen Verwendungszwecken hergestellt und eignen sich hervorragend für die Herstellung von Kranzkernen oder ganz allgemein von Kernkörpern für Pflanzen und Blumengebinde.

Fig. 3 macht deutlich, daß auch zwei derartige, gesteppte Strohstreifen 11 nebeneinanderliegend mit Bindemitteln versehen und dann durch Formpressen in eine halbovale Querschnittsform gebracht werden können.

Fig. 4 deutet an, daß auch die Möglichkeit besteht, einen Strohstreifen 11 mit relativ schmalem Querschnitt durch Umfalten in eine Form zu bringen, die dann nach dem Zusatz von Bindemitteln formgepreßt werden kann, um eine ovale oder halbovale Querschnittsform für einen Kranzkern 13 zu erhalten.

In jedem Falle ist ein aus Strohstreifen 11 mit aushärtbaren Bindemitteln versehener Kernkörper, beispielsweise in der Form eines Kranzkernes 13, insgesamt biologisch abbaubar und somit äußerst umweltfreundlich. Der Kernkörper ist äußerst stabil und somit für die Herstellung von Pflanzen und Blumengebinden bestens geeignet. Außerdem kann ein derartiger Kernkörper maschinell und demzufolge äußerst kostengünstig und in hohen Stückzahlen preiswert gefertigt werden.

Die Herstellung von Kernkörpern erfolgt erfindungsgemäß in der Art, daß die Verpressung der mit aushärtbaren Bindemitteln versetzten Strohstreifen 11 in beheizbaren Formen in einem Temperaturbereich von etwa 150 bis 250 °C durchgeführt wird.

Durch die Verpressung in den angegebenen Temperaturbereichen in beheizbaren Formen wird eine rasche Aushärtung der Bindemittel erzielt. Somit ist eine äußerst schnelle Entformung oder Fertigstellung der Kernkörper möglich. Außerdem wird durch die relativ hohe Temperatur die Oberfläche der Kernkörper sehr glatt, d.h., die fertigen Kernkörper können ohne weiteres auf Hochleistungs-Wickelmaschinen auch mit vergleichsweise dünnen Bändern umwickelt werden, ohne daß dabei die Gefahr einer Beschädigung dieser Bänder besteht.

## Ansprüche

1. Aus biologisch abbaubarem Material gefertigter Kernkörper für Pflanzen und Blumengebinde, insbesondere in Form eines Kranzkernes, **dadurch gekennzeichnet,** daß der Kernkörper (10) aus mindestens einem mit aushärtbaren Bindemitteln versetzten, gesteppten und formgepreßten Strohstreifen (11) besteht.

2. Kernkörper nach Anspruch 1, dadurch gekennzeichnet, daß der oder die mit Bindemitteln versetzte bzw. versetzten Strohstreifen (11) in eine im Querschnitt ovale oder halbovale Form gepreßt ist bzw. sind.

3. Kernkörper nach Anspruch 1 oder 2, dadurch gekennzeichnet, daß zur bildung eines Kranzkernes ein oder mehrere Strohstreifen (11) zu einem ringförmigen Gebilde zusammengefaßt ist bzw. sind.

4. Kernkörper nach einem oder mehreren der vorher gehenden Ansprüche, dadurch gekennzeichnet, daß der oder die Strohstreifen (11) durch Zusammenfalten doppellagig ausgebildet sind.

5. Verfahren zur Herstellung eines Kernkörpers nach einem oder mehreren der Ansprüche 1 bis 4, dadurch gekennzeichnet, daß die Verpressung der mit aushärtbaren Bindemitteln versetzten Strohstreifen (11) in beheizbaren Formen in einem Temperaturbereich von etwa 150 bis 250 °C erfolgt.

Fig. 2

Fig. 1

Fig. 3

Fig. 4

Europäisches
Patentamt

**EUROPÄISCHER RECHERCHENBERICHT**

Nummer der Anmeldung

EP 90 10 1269

| | **EINSCHLÄGIGE DOKUMENTE** | | |
|---|---|---|---|
| **Kategorie** | **Kennzeichnung des Dokuments mit Angabe, soweit erforderlich, der maßgeblichen Teile** | **Betrifft Anspruch** | **KLASSIFIKATION DER ANMELDUNG (Int. Cl.5)** |
| X | CH-A- 362 566 (CAPAUL-GROSSI) * Das ganze Dokument * --- | 1-3,5 | A 01 G 5/04 |
| A | DE-A-3 725 209 (SCHWARZENBERG). * Das ganze Dokument * --- | 1-3 | |
| A | FR-A-2 315 245 (SALVY) * Seite 4, Zeilen 28-29 * ----- | 2 | |
| | | | **RECHERCHIERTE SACHGEBIETE (Int. Cl.5)** |
| | | | A 01 G |

Der vorliegende Recherchenbericht wurde für alle Patentansprüche erstellt

| **Recherchenort** | **Abschlußdatum der Recherche** | **Prüfer** |
|---|---|---|
| DEN HAAG | 11-05-1990 | PERNEY Y.J. |

KATEGORIE DER GENANNTEN DOKUMENTE

X : von besonderer Bedeutung allein betrachtet
Y : von besonderer Bedeutung in Verbindung mit einer
      anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
      nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes
      Dokument

EPO FORM 1503 03.82 (P0403)